# FASCICULE DE BREVET EUROPEEN

(11) **EP 0 869 860 B1**
(45) Date de publication et mention de la délivrance du brevet: **22.03.2000**
(21) Numéro de dépôt: 96931097.8
(22) Date de dépôt: 10.09.1996
(51) Int. Cl.: B23H 7/10

(54) **DISPOSITIF D'ALIMENTATION MULTIPLE EN FIL D'UNE MACHINE**
ZUFUHRVORRICHTUNG FÜR MEHRERE DRÄHTE AN EINER MASCHINE
YARN MULTIPLE SUPPLY DEVICE FOR A MACHINE

(30) Priorité: 12.09.1995 FR 9510880
(43) Date de publication de la demande: 14.10.1998
(73) Titulaire: TREFIMETAUX, 92400 Courbevoie (FR)
(72) Inventeur: MICHARD, Laurent, F-61270 Rai (FR)
(74) Mandataire: Pigasse, Daniel
(86) Numéro de dépôt international: FR9601383
(87) Numéro de publication internationale: WO9710069

(56) Documents cités:
- EP-A- 0 581 493
- US-A- 5 237 145
- PATENT ABSTRACTS OF JAPAN vol. 010, no. 311 (M-528), 23 Octobre 1986 & JP,A,61 121832 (MITSUBISHI ELECTRIC CORP), 9 Juin 1986,

## Description

### DOMAINE DE L'INVENTION

L'invention concerne le domaine de l'alimentation, en fil, de machines, hors du domaine du textile et de la confection.

### ETAT DE LA TECHNIQUE

Dans le domaine de la mécanique, un certain nombre de machines utilisent ou consomment des fils, et nécessitent de ce fait un dispositif d'alimentation en fil et des moyens pour changer de fil. C'est le cas par exemple des machines d'électroérosion à fil, où il est nécessaire de réaliser un usinage avec des fils de différents diamètres.
Ainsi, on connaît déjà par le brevet US 5,237,145 un dispositif pour changer automatiquement le fil sur une machine d'électroérosion, et passer par exemple d'un fil à diamètre donné à un fil de plus petit diamètre pour assurer un usinage de plus grande finesse.
Comme le montre clairement la figure 1 de ce brevet US, ce dispositif se définit principalement par deux éléments caractéristiques :
a) ce dispositif comprend deux dispositifs d'alimentation (références US : 150a et 150b), munis de moteurs (références US : 24,26) et d'un tube guide (référence US : 154a,154b), dispositifs correspondant aux deux types de fils, ainsi que des moyens pour mettre en place le dispositif actif , puis l'enlever et le remplacer par l'autre dispositif,
b) la mise en place du dispositif actif consiste à l'aligner, grâce aux vérins (référence US : 151a,151b), avec les éléments de guidage du fil de la machine d'électroérosion (référence US 5 : 153a et 153b), et à le rapprocher de ces éléments de guidage grâce à une vis de guidage (référence US : 18) alignée avec ces éléments de guidage et un moteur (référence US : 20).

De même, la demande de brevet européen EP-A-0 581 493 décrit un dispositif pour changer de fil d'une machine à électroérosion, dispositif alimenté en bobines de fil, et dans lequel les extrémités des fils sont raboutées par soudure.

On connaît aussi la demande japonaise JP-A-61 121832 dans laquelle, de manière à changer de fil, une machine à électroérosion est munie d'un tube guide d'alimentation orientable vers l'un ou l'autre des deux fils en bobine alimentant la machine à électroérosion.

### PROBLEME POSE

La solution au problème du changement de fil, apportée par les dispositifs d'alimentation décrits dans l'état de la technique, présente des inconvénients de quatre ordres :
1) d'une part, ces dispositifs ne sont adaptés que pour une seule machine d'électroérosion, et pour un nombre limité de fils (deux fils dans chacun des trois documents cités).
   Il est a noter également que, compte tenu des problèmes de coût et d'encombrement, la solution de l'état de la technique ne permet que la présence d'un nombre limité de fils d'alimentation (deux dans les trois documents cités) ou de dispositifs d'alimentation, ce qui est un inconvénient dans la mesure où il serait souhaitable, notamment dans le cas de l'usinage par machine d'électroérosion à fil, de disposer d'au moins 4 dispositifs d'alimentation, deux correspondant à deux fils de diamètre différents, et deux de secours en cas de rupture du fil.
2) Hormis le cas de très petits ateliers indépendants, les ateliers comprennent un parc de machines d'électroérosion. i Dans ce cas le plus fréquent, il y aurait, avec les dispositifs selon l'état de la technique, nécessité de multiplier les dispositifs dans une grande proportion, soit une duplication d'équiments, en autant de fois qu'il y a de machines, ce qui alourdit les coûts,
3) d'autre part, les dispositifs selon l'état de la technique imposent généralement des contraintes d'alignement avec la machine d'électoérosion, et ces dispositifs font donc pratiquement corps avec elle, ce qui augmente d'autant l'encombrement sur le lieu d'usinage,
4) enfin, les dispositifs connus sont mal adaptés aux configurations modernes d'ateliers où il est souhaité que les machines, notamment d'électroérosion, ne soient pas encombrées par les bobines de fil, ces bobines de fil destinées à alimenter lesdits dispositif devant, de préférence, servir pour alimenter l'ensemble d'un parc de machines et être stockées à part.

### OBJET DE L'INVENTION

L'invention a pour objet un dispositif d'alimentation multiple qui résout les problèmes mentionnés précédemment.
Cet objet n'est pas limité au type particulier de machine d'électroérosion évoqué dans l'état de la technique.

### DESCRIPTION DE L'INVENTION

Selon l'invention, le dispositif d'alimentation multiple d'au moins une machine, en fil sélectionné, comprend :
a) autant de dispositifs d'approvisionnement DAᵢ, i allant de 1 à n, avec n allant de 2 à un nombre quelconque, que de fils Fᵢ à sélectionner, chaque dispositif DAᵢ, étant alimenté à partir d'un conditionnement Cᵢ de fil grâce à un moyen de guidage amont GMᵢ,
b) au moins un dispositif récepteur DR, muni d'un moyen de guidage aval GV destiné à alimenter en fil ladite machine,
c) un distributeur, moyen de mettre en regard ledit dispositif d'approvisionnement DAᵢ, correspondant audit fil sélectionné Fᵢ et ledit dispositif récepteur DR,
et dans lequel,
1) ledit fil (9) alimentant lesdits dispositifs d'approvisionnement DAᵢ (6) est redressé,
2) ledit moyen de guidage aval GVⱼ(5) est un tube flexible,
3) ledit moyen de guidage amont GMᵢ (4) est un tube flexible.

Ce dispositif d'alimention inclut un moyen pour cisailler le fil, moyen qui peut être incorporé soit au dispositif d'approvisionnement, soit au distributeur, soit au dispositif récepteur.
Les moyens de guidage aval et/ou amont, typiquement des tubes ou des gaines, seront de préférence souples, mais ils peuvent être rigides, dans la mesure où ils permettent le déplacement relatif dudit dispositif DAᵢ et ledit dispositif récepteur DR pour les mettre en regard.
En pratique, le nombre n de fils est rarement supérieur à 16. Mais l'invention s'applique à un nombre quelconque de fils.

Les moyens définis par l'invention résolvent l'ensemble des problèmes posés.
En effet, d'une part, pour une machine donnée devant être alimentée en un nombre quelconque n de fils, la majeure partie du dispositif d'alimentation est commun et comprend le distributeur et le dispositif récepteur DR flexible, muni d'un moyen de guidage aval destiné à alimenter en fil ladite machine.
Seuls les dispositifs d'approvisionnement DAᵢ, i allant de 1 à n, doivent être en nombre égal au nombre de fils.

D'autre part, l'invention ne se limite pas à l'alimentation d'une seule machine,le même distributeur et les mêmes moyens en amont dudit distributeur (dispositifs d'approvisionnement, moyens de guidage amont, et les n fils redressés) pouvant être utilisés pour l'ensemble du parc de machines.

En outre, l'invention prévoit l'utilisation de moyens de guidage amont et aval flexibles (typiquement des tubes ou des gaines), ce qui permet de ne pas encombrer les machines utilisatrices de fil de dispositifs annexes relatifs à leur alimentation en fil, le distributeur selon l'invention pouvant être relativement éloigné desdites machines.
Ainsi, tout un ensemble assez volumineux, incluant les différents conditionnements de fils, peuvent être relativement éloignés de ladite machine, c'est à dire distants de quelques mètres à plusieurs dizaines de mètres (magasin de stockage).

Enfin, l'ensemble des moyens selon l'invention, et notamment l'emploi conjoint d'un distributeur selon l'invention, de fils prédressés et de moyens de guidage flexibles, permet à la fois un partage de moyens communs à tout un parc de machines, et une localisation des moyens d'alimentation en fils qui peut, comme déjà mentionné, être totalement séparée des machines à alimenter en fil, tous éléments qui sont favorables à une gestion économique et rationnelle des ateliers.

Le distributeur selon l'invention est simplement tout moyen mécanique permettant de mettre en regard le dispositif récepteur DR et le dispositif d'approvisionnement DAᵢ choisi, grâce à des moyens de guidage (rails de guidage, vis sans fin, etc...) et de déplacement (vérins, moteurs, etc...) connus en eux-mêmes. Ainsi, le changement de fil avec le dispositif selon l'invention est extrêmement simple et rapide puisque résultant du simple déplacement relatif d'un dispositif récepteur DR et d'un dispositif d'approvisionnement DAᵢ, d'une position à une autre position voisine, sans qu'il soit nécessaire de rabouter les fils.

### DESCRIPTION DES FIGURES

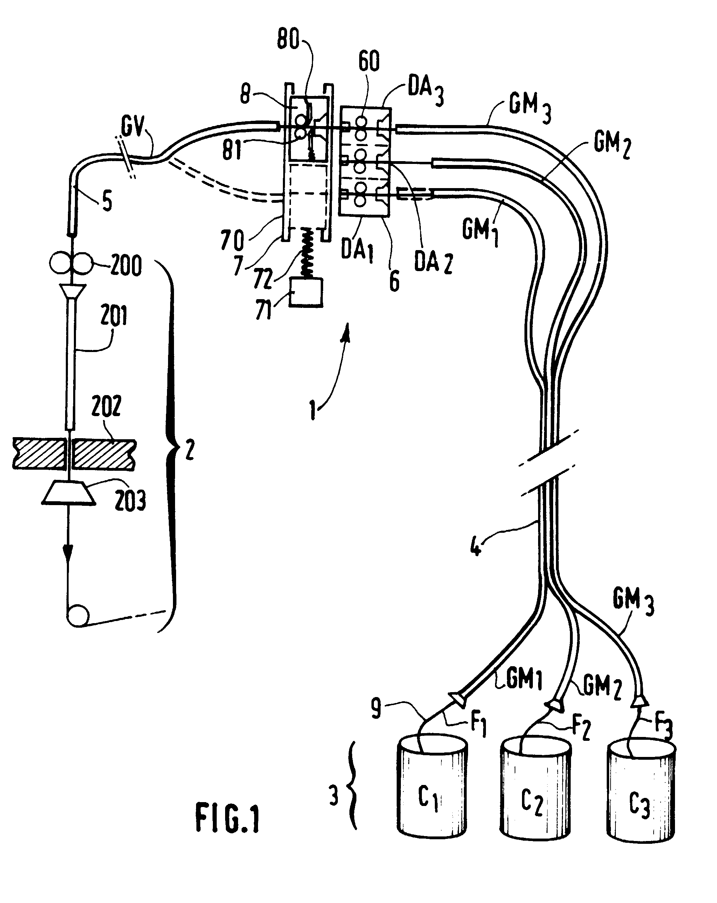

5 La figure 1 est une représentation schématique d'une modalité de l'invention, avec, d'amont en aval, un conditionnement (3) de fil (9), le dispositif d'alimentation multiple (1) selon l'invention, et une machine d'électroérosion (2).
Le conditionnement (3) comprend 3 fûts désignés par C₁, C₂, C₃, les fils correspondants étant désignés par F_{1,} F₂, F₃. D'une manière générale, dans tout ce qui suit, les objets ayant même indice sont en correspondance.
Le dispositif d'alimentation multiple (1) comprend:
- un moyen de guidage amont (4) du fil pour chaque fil, les trois moyens de guidage représentés étant désignés par GM₁, GM₂, GM₃.
- un dispositif d'approvisionnement (6) pour chaque fil, les trois moyens d'approvisionnement étant désignés par DA₁, DA₂, DA₃. Chaque dispositif d'approvisionnement (6) comprend un jeu de roues ou de galets d'entraînement motorisés (60) qui permettent l'engagement du fil jusqu'aux galets (81) du dispositif récepteur (8) ou le retrait du fil après action de la cisaille (80).
- un distributeur (7) comprenant un moyen de guidage (70) et de mise en mouvement du dispositif récepteur (8) comprenant un moteur (71) et une vis sans fin (72).
- un dispositif récepteur (8) comprenant une cisaille (80) et un jeu de galets d'entraînement motorisés (81).
- un moyen de guidage aval GV (5) flexible du fil reliant le dispositif récepteur (8) à la machine d'électroérosion (2).

La machine d'électroérosion (2) comprend un jeu de roues d'entraînement (200), un guide-fil supérieur (201), un guide-fil inférieur (203), la pièce à usiner (202) étant située entre ces deux guides-fil.
Le plus souvent, les galets (81), tout comme les galets (60), ne sont moteurs que pendant la phase initiale d'engagement du fil, puis, dès que le fil atteint les roues d'entraînement (200), celles-ci deviennnent motrices pour le fil, et dès lors, les galets (60,81) tournent en roue libre.

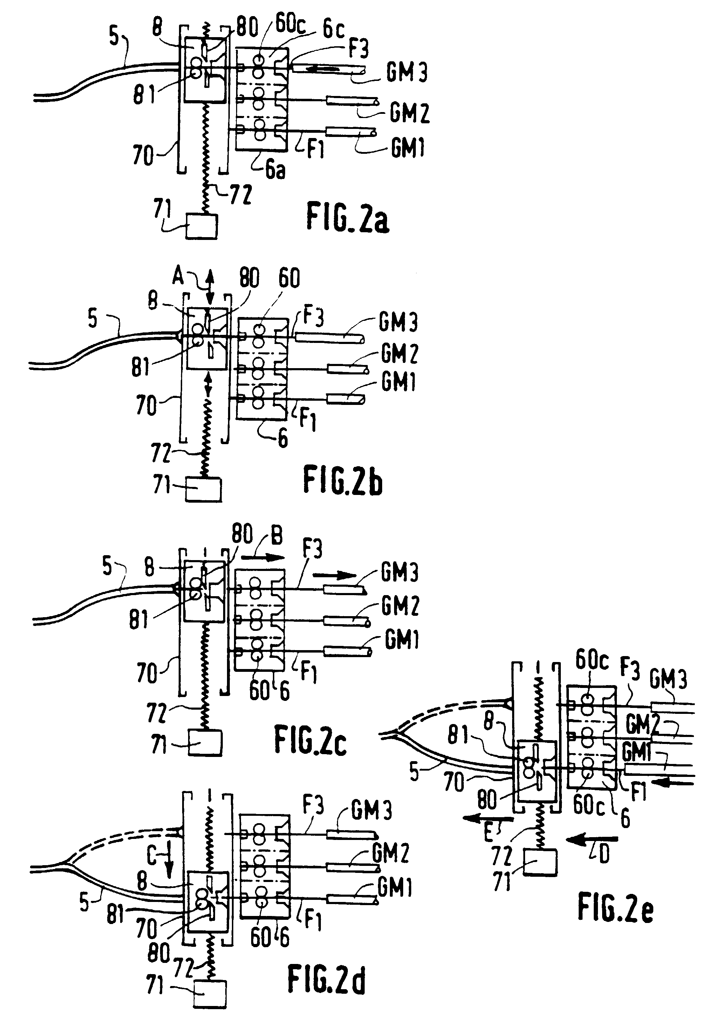

Les figures 2a à 2e illustrent, en coupe transversale, le fonctionnement du dispositif selon l'invention : la succession des étapes conduisant au changement du fil F3 par le fil F1.

La figure 2a représente l'état initial : le dispositif est en cours de fonctionnement et alimenté en fil F3, le fil F3 allant de la droite vers la gauche.
A la figure 2b, le fil F3 est coupé par la cisaille (80), ce qui est symbolisé par la flèche A.
A la figure 2c, les galets d'entraînement (60c) du dispositif d'approvisionnement (6c) assurent le retrait du fil F3 dans le sens de la flèche B, de sorte que la fil F3 soit juste désengagé du dispositif récepteur (8).
A la figure 2d, le dispositif récepteur (8) est déplacé, grâce aux rails de guidage (70), au moteur (71) et à la vis sans fin motrice (72), de la position "3" à la position "1".
A la figure 2e, le fil F1 est engagé dans le dispositif récepteur (8) par mise en rotation des galets (60a), et éventuellement des galets (81), jusqu'à ce que la roue d'entraînement (200) de la machine d'électroérosion prenne le relais.

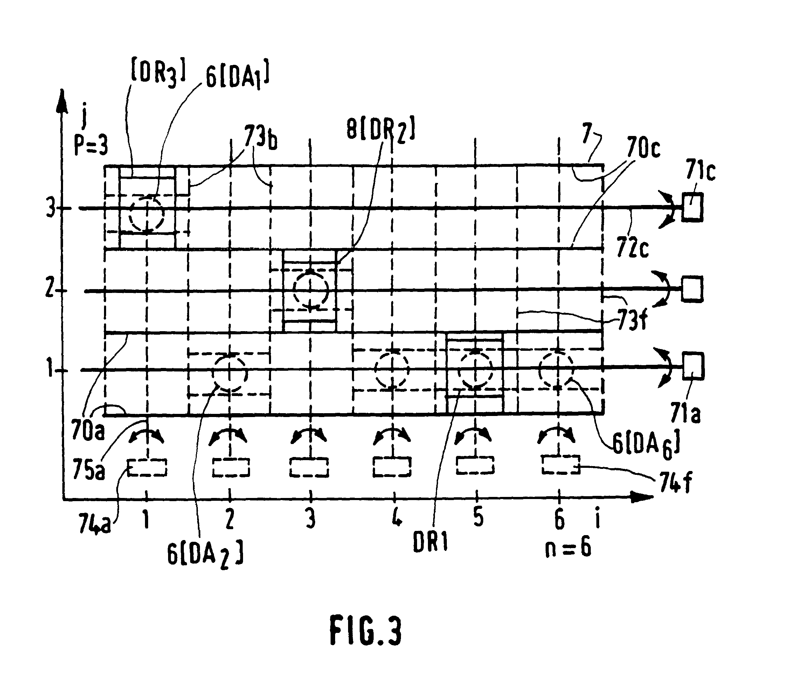

La figure 3 est une vue schématique de face d'une modalité de distributeur (7) dans le cas où 3 machines doivent, chacune, être alimentées en un fil choisi parmi 6, grâce à 6 dispositifs d'approvisionnements (6) et 3 dispositifs récepteur (8).
Les parties en trait plein (vue de face) correspondent aux 3 dispositifs récepteur (8), et les parties en pointillés (vue de dos) correspondent aux 6 dispositifs d'approvisionnements (6).

Le distributeur (7) comprend des moyens de guidage et de mise en mise en mouvement et en correspondance des 6 dispositifs d'approvisionnements (6) et des 3 dispositifs récepteur (8) grâce à :
- un treillis de moyens de guidage, entrecroisement de 3 paires de rails de guidage (70a à 70c) horizontaux des 3 dispositifs récepteur (8), avec les 6 paires de rails de guidage (73a à 73f) verticaux des 6 dispositifs d'approvisionnements (6).

Sur ce treillis à maille ouverte, chaque dispositif d'approvisionnement (6) ne peut se déplacer que selon une colonne verticale donnée et est repéré par DAᵢ, i = 1 à 6, tandis que chaque dispositif récepteur (8) ne peut se déplacer que selon une ligne horizontale donnée, et est repéré par DRj, avec j = 1 à 3. Ces désignations figurent entre crochets sur la figure 3.
- des moyens de déplacement des 3 dispositifs récepteurs par moteurs (71a à 71c) et vis sans fin (72a à 72c), et des 6 dispositifs d'approvisionnement par moteurs (74a à 74f) et vis sans fin (75a à 75f).

La figure 4a est une vue de dessus du distributeur de la figure 3.
La figure 4b est une vue de côté (côté droit) du distributeur de la figure 3.

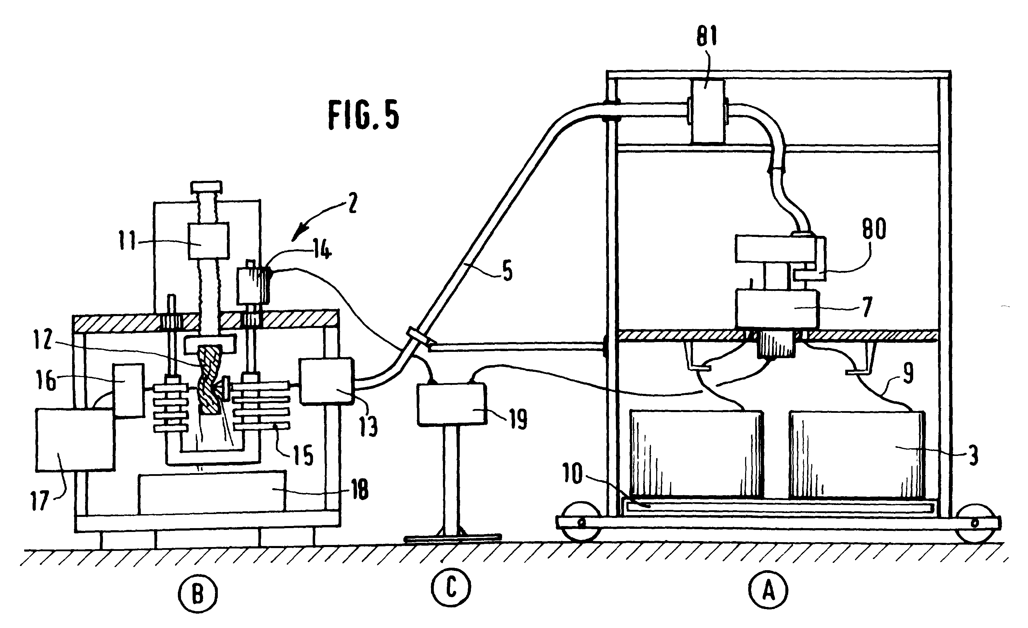

La figure 5 est une représentation schématique d'un ensemble d'usinage (découpe par électroérosion) composé de trois unités notées A, B et C:
L'unité A représente un chariot mobile comprenant:
- les fûts (3) contenant du fil prédressé (9) de différents diamètres et nuances, montés sur la palette (10),
- un sélecteur de fil à barillet (7), la coupure du fil entre le réceptacle multi-fil fixé inférieur et le sélecteur rotatif supérieur se faisant à l'aide de la cisaille (80),
- un entraîneur à galets (81) envoyant le fil dans la gaine (5).
L'unité B représente une machine fixe à découpe par électroérosion (2) comprenant:
- le dispositif de déplacement (11 de la pièce à usiner (12),
- le réceptacle de réception du fil (13) dans lequel vient s'enficher la gaine (5),
- le sélecteur à déplacement vertical (14) supportant les guide-fils (15),
- l'entraîneur ajusteur de la tension du fil (16) et le bac de réception (17) pour le fil consommé,
- le bac pour le fluide d'usinage (18).
L'unité C représente le pupitre de commande (19) pour la coordination des deux sélecteurs (7) et (14).

### DESCRIPTION DETAILLEE DE L'INVENTION

Selon une première modalité de l'invention relative à un dispositif d'alimentation (1) d'une seule machine (2), lesdits dispositifs d'approvisionnement DAᵢ (6) sont fixes, et ladite mise en regard dudit dispositif DAᵢ sélectionné et dudit dispositif récepteur DR (8) est effectuée grâce à un distributeur (7) assurant le déplacement dudit dispositif récepteur DR (8) en regard dudit dispositif d'approvisionnement DAᵢ (6), correspondant au fil sélectionné Fᵢ (9).

Ladite mise en regard dudit dispositif DAᵢ (6) sélectionné et dudit dispositif récepteur DR (8) peut être effectuée grâce à un distributeur (7) soit linéaire, soit circulaire, à n positions correspondant aux sorties des n dispositifs DAᵢ (6), par un déplacement soit linéaire, soit angulaire sélectif dudit dispositif récepteur DR (8).

Les figures 1 et 2a à 2e illustrent cette modalité dans le cas particulier d'un distributeur linéaire recevant 3 dispositifs DAᵢ (6), correspondants à 3 fils (9).

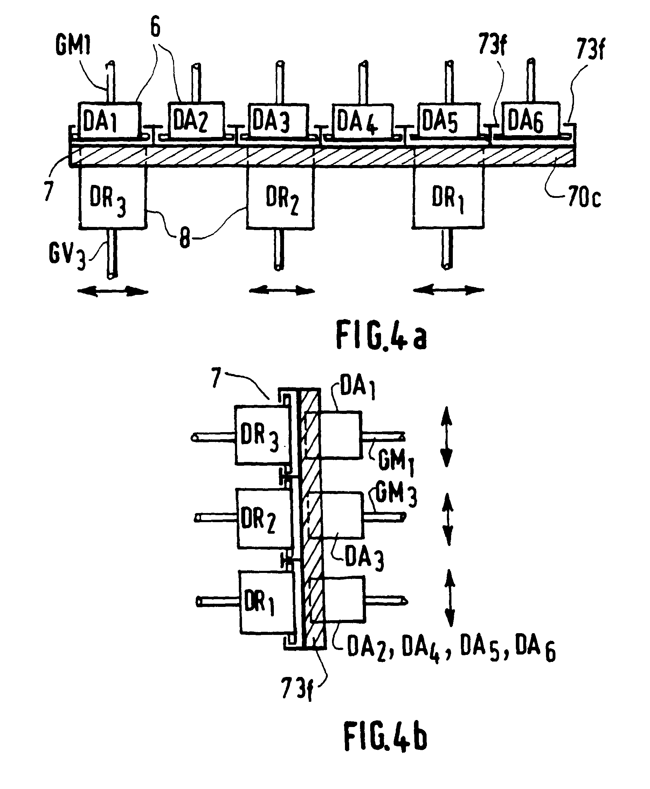

Selon une seconde modalité de l'invention relative à un dispositif destiné à alimenter plus d'une machine Mⱼ (2), ce dispositif (1) comprend autant de dispositifs récepteurs DRⱼ (8) et de moyens de guidage aval GVⱼ (5), j allant de 2 à p, 5 avec un nombre p quelconque mais typiquement inférieur à 10, que de machines Mⱼ (2) à alimenter, dans lequel ladite mise en regard dudit dispositif DAᵢ (6) et dudit dispositif récepteur DRⱼ (8) sélectionnés est effectuée grâce à un distributeur (7) matriciel à n lignes et p colonnes, chacun desdits dispositifs récepteurs DRⱼ (8) étant déplacé linéairement sur la ligne j pour se positionner face à importe quelle colonne i sélectionnée, et chacun desdits dispositifs d'approvisionnement DAᵢ (6) étant déplacé linéairement sur la colonne i pour se positionner face à importe quelle ligne j sélectionnée.
Cette seconde modalité est illustrée aux figures 3, 4a et 4b.

Avec ce type de distributeur, la mise en regard d'un dispositif d'approvisionnement (6) et d'un dispositif récepteur (8) est assurée par déplacement de l'un et/ou de l'autre dispositif (6) ou (8).

L'invention peut s'appliquer à tout type de fil moyennant des adaptations des moyens d'entraînement. Cependant, les fils qui peuvent être facilement utilisés selon l'invention sont ceux qui présentent une résistance à la compression suffisante pour pouvoir être entraînés par des moyens mécaniques simples tels que des roues ou des galets d'entraînement, ce n'est généralement pas le cas pour les fils, relativement fins, utilisés dans l'industrie textile.
Les fils (9) utilisables peuvent être constitués de toute matière, matières naturelles, matières plastiques, métaux, mélanges de matériaux ou matériaux composites.

De préférence, ledit fil (9) est métallique ou comprend une âme métallique.

Ledit conditionnement (3) de fil (9) peut consister en une bobine ou une couronne, ou tout autre moyen classique de conditionnement de fil. Des moyens auxiliaires pour dérouler ledit fil, connus en eux-mêmes, sont introduits en amont dudit distributeur (7). Dans le cas d'un conditionnement en bobines, ces moyens consistent en des dévidoirs motorisés, asservis par des patins de régulation de la tension du fil ; ces dispositifs sont généralement coûteux et encombrants.
De plus, le fil doit être redressé avant d'entrer dans les gaines GMᵢ. Ceci est nécessaire pour assurer un coulissage correct du fil dans les tubes ou gaines et son positionnement précis dans le distributeur. Pour les fils de petit diamètre conditionnés en bobine, tels que les fils pour électroérosion, des moyens sont connus pour assurer une rectitude suffisante sans qu'il soit nécessaire de redresser le fil. En revanche, pour les fils de plus gros diamètre (utilisés par exemple pour le décolletage, la frappe à froid ou le soudage), et pour les fils conditionnés en fûts, un dispositif de redressage doit être installé en amont de chaque gaine. Ces dispositifs sont généralement coûteux, encombrants et d'un réglage délicat.
Dans tous les cas de figure, il est très avantageux d'utiliser un conditionnement de fil pré-dressé en fût, tel que décrit dans la demande française 95-00607 au nom de la demanderesse. Dans ce cas, le fil (9) sortant du fût est directement rectiligne et sans torsion.

Selon l'invention, ledit dispositif d'approvisionnement DAᵢ (6) comprend un moyen d'entraînement amont (60). Ledit dispositif récepteur DRⱼ (8) peut comprendre éventuellement une cisaille (80) et un moyen d'entraînement aval (81).
Ces moyens sont représentés sur les figures 1 et 2a à 2e.

Le dispositif selon l'invention comprend aussi des moyens d'automation et de coordination (calculateurs ou ordinateurs, automates programmables, etc...) permettant le changement automatique de fil Fᵢ et/ou de machine Mⱼ, notamment par la mise en oeuvre automatique dudit distributeur (7) avec ses moyens de mise en mouvement (71,74), des moyens d'entraînement amont (60) et aval (81) et de ladite cisaille (80), ou tout autres moyens relatifs au changement de fil.
Ces moyens n'ont pas été représentés sur les figures 1 et 2a à 2e.

Dans le cas où ladite machine est une machine d'électroérosion (2), au changement automatique de fil, quant'au diamètre, peut être couplé automatiquement le changement de guide-fil (201,203) correspondant, étant donné qu'à chaque diamètre de fil correspond un guide-fil de diamètre intérieur donné.

L'invention permet aussi d'obtenir une alimentation de secours automatisée, par détection de l'état des moyens d'entraînement amont (60) et aval (81), typiquement des galets motorisés dont la rotation peut être détectée, dans les différents cas suivants :
a) rupture d'alimentation du fil :
   En dehors des opérations de changement de fil, les galets motorisés (60,81) des dispositifs d'alimentation DAᵢ et des dispositifs récepteurs DAⱼ sontinactifs. Ils tournent librement, entraînés par le frottement du fil ; ce dernier est lui-même entraîné par un dispositif (200) propre à la machine (2) située en aval. Les moteurs des galets n'entrent en action que lors des changements de fils, comme déjà indiqué précédemment.
   Cependant, on peut également utiliser ces galets motorisés pour détecter un défaut d'alimentation en amont du dispositif (rupture de fil, ou fin de bobine). En effet, lors du déroulement normal du fil, les moteurs des galets, étant entraînés par le mouvement du fil, délivrent un courant électrique par effet dynamo. A l'occasion d'un défaut d'alimentation en fil (soit le fil Fᵢ), il s'écoule un bref laps de temps pendant lequel les galets (60) du dispositif DAᵢ s'arrêtent, alors que ceux (81) du dispositif DRⱼ situé en regard continuent à tourner. Durant ce laps de temps, le moteur des galets alimenteurs (60) ne délivre plus de courant, alors que le moteur des galets récepteurs continue à en délivrer. Ceci est un indicateur, fiable à 100%, de la rupture d'alimentation en fil.
   Pour assurer une alimentation de secours automatique en cas de rupture d'alimentation du fil Fᵢ, il suffit :
   - d'engager au préalable un fil Fᵢ', identique à Fᵢ, dans le dispositif d'alimentation DA_{i'},
   - de programmer le distributeur (7) de manière à déplacer, dès que la rupture du fil Fᵢ est détectée, le dispositif récepteur DRⱼ (situé en face de DAᵢ) pour le positionner en regard de DA_{i'}, afin que l'alimentation puisse reprendre avec le fil F_{i'}.
b) blocage du fil :
   Si les galets (60,81) des dispositifs DAᵢ et DRⱼ s'arrêtent simultanément, on détecte non pas une rupture de l'alimentation en fil, mais un arrêt du déroulement. Celui-ci peut provenir, soit d'un blocage au niveau du dévidage de la bobine, soit d'un arrêt de la machine.
   Dans le premier cas de figure (mauvais dévidage de la bobine), on peut programmer l'intervention automatique comme suit : la cisaille (80) au niveau du fil Fᵢ est actionnée, et le dispositif récepteur DRⱼ est positionné face au dispositif d'alimentation DA_{i'} en fil F_{i'}. Si la portion aval du fil sectionné s'évacue correctement (comme en témoigne alors la mise en rotation momentanée du galet (81) du dispositif DRⱼ), c'est que le blocage a bien lieu en amont, donc au niveau de la bobine ou du conditionnement du fil (3). La machine peut alors redémarrer normalement en utilisant le fil F_{i'}.
   Si la portion aval du fil sectionné ne s'évacue pas et si, en conséquence, les galets (81) restent immobiles, cela implique un blocage en aval, au niveau de la machine (2). Dans ce cas, le système déclenche une alarme afin qu'un opérateur intervienne sur la machine (2).
c) échecs répétés du réenfilage automatique (en particulier dans le cas des machines d'électroérosion) :
   Dans le cas de l'électroérosion, certains arrêts de la machine (2) font pour ainsi dire partie de son fonctionnement normal, lors de la rupture du fil au niveau de sa zone active (zone d'usinage proprement dite). Les machines actuelles d'électroérosion possèdent un dispositif de réenfilage automatique (du même fil de la même bobine), qui permet de traiter ce type d'incident pratiquement inévitable. Le réenfilage s'opère correctement à condition que le fil présente une rectitude suffisante, ce qui est généralement le cas. Il arrive cependant que, le fil étant insuffisamment dressé, le réenfilage s'avère impossible : dès lors la machine s'arrête.
   On peut pallier ce dysfonctionnement en programmant le calculateur de la machine d'électroérosion pour que, au terme d'un nombre de tentatives de réenfilage (3 par exemple), il ordonne au distributeur de sectionner le fil Fᵢ et d'engager le fil F_{i'}. On supprime ainsi la perte de production due à l'arrêt prolongé de la machine.
d) témoin de changement de bobine (3) :
   Le calculateur qui pilote le dispositif d'alimentation (1) conserve en mémoire les numéros des fils Fᵢ qui ont été remplacés. En consultant périodiquement le registre de mémoire correspondant, le chef d'atelier est tenu informé et peut organiser le remplacement des bobines vides ou défectueuses. Il va de soi que l'invention n'est pas limitée aux seuls moyens décrits dans les exemples ou sur les figures, et que les fonctions de l'invention peuvent être mises en oeuvre selon de nombreuses variantes pratiques qui conduisent aux mêmes résultats.

Un autre objet de l'invention est l'application du dispositif selon l'invention à l'alimentation multiple et centralisée d'une ou plusieurs machines Mⱼ (2) par plusieurs fils Fᵢ (9), lesdits moyens de guidage (4,5) et/ou d'entraînement (60,81) étant adaptés aux caractéristiques mécaniques dudit fil, notamment à sa résistance à la compression.
De préférence, cette application concerne les machines (2) d'électroérosion à fil, de décolletage, de frappe à froid et de soudure.

### EXEMPLES DE REALISATION

### EXEMPLE 1

On a réalisé le dispositif représenté aux figures 1, 2a à 2e, sauf que les moyens de mise en mouvement (71,72) du dispositif de réception (8) ont été constitués par un vérin hydraulique à course programmable.
Le dispositif a été automatisé de manière à réaliser séquentiellement toutes les étapes qui ont été détaillées aux figures 2a à 2e.
Le conditionnement (3) comprenait 3 fûts de fil prédressé pour machine d'électroérosion.
Les gaines (4) étaient en tube souple de 12 m de longueur.
L'ensemble constitué par les dispositifs d'approvisionnement (6), le distributeur (7) et le dispositif récepteur (8) occupait un faible volume de 10x20x50 cm³, et avait été placé au-dessus du pupitre de commande de la machine d'électroérosion.

On a observé que les changements de fil s'effectuaient en moins de 2 secondes.

### EXEMPLE 2

On a réalisé le dispositif d'alimentation multiple (1) tel que représenté aux figures 3, 4a et 4b. Comme dans le cas de l'exmple 1, des vérins hydrauliques à course et vitesse prgrammable ont été utilisés au lieu des moteurs (71,74) et vis sans fins (72,75).
Le distributeur (7) a été formé en positionnant sur un bâti métallique 3 jeux de rails de guidage horizontaux (70a,70b,70c), et 6 jeux de rails verticaux (73a à 73f).
Sur chacun des rails verticaux, on a placé un dispositif d'approvisionnement (6), noté DAᵢ (i = 1 à 6), mû par un vérin hydraulique.

De même, sur chacun des rails horizontaux, on a placé un dispositif récepteur (8), noté DRⱼ (j = 1 à 3), mû par un vérin hydraulique.
Les dispositifs d'approvisionnements (6) et récepteurs (8) étaient analogues à ceux utilisés à l'exemple 1.

Comme dans l'exemple 1, le pilotage du dispositif (1) a été automatisé et programmé. En particulier, dans le présent exemple, comme il y a partage des ressources (les 6 fils) entre 3 machines, le programme doit prévoir et gérer les "conflits" au cas où deux machines auraient à utiliser le même fil.

Comme les déplacements des vérins verticaux et horizontaux sont indépendants, le temps de changement de fil, dans l'exemple 2, est sensiblement le même que celui de l'exemple 1.

### AVANTAGES DE L'INVENTION

L'invention présente tous les avantages correspondant à la solution des problèmes posés par l'état de la technique.

Parmi ceux-ci, les plus significatifs sont sans aucun doute, d'abord la possibilité de séparer, sur un lieu de stockage, tout les conditionnements de fil, de manière à avoir un lieu d'usinage ou de transformation débarrassé de volumes morts encombrants.
Un autre avantage important réside dans l'utilisation conjointe de moyens de guidage amont et aval, et de fils de préférence redressés, ce qui permet une distribution de ces fils analogue à celle de fluides ou d'énergies (distribution d'eau, de gaz, d'électricité, etc...), et presqu'aussi souple que celle de ces fluides ou énergies.

Un autre avantage réside dans l'automatisation de l'alimentation en fil, automatisation qui prend en compte les multiples incidents qui peuvent se produire, de sorte que, en dehors du cas où la machine elle-même est défectueuse, tous les incidents liés au fil lui-même et à son alimentation, sont sans incidence notable sur la productivité de la machine elle-même, car ils sont traités en temps masqué par l'opérateur.

## Revendications

1. Dispositif d'alimentation multiple (1) d'au moins une machine (2), en fil (9) sélectionné, comprenant :
a) autant de dispositifs d'approvisionnement DAᵢ (6), i allant de 1 à n, avec n allant de 2 à 16, que de fils Fᵢ (9) à sélectionner, chaque dispositif DAᵢ (6), étant alimenté à partir d'un conditionnement Cᵢ (3) de fil (9) grâce à un moyen de guidage amont GMᵢ (4),
b) au moins un dispositif récepteur DR (8), muni d'un moyen de guidage aval GVⱼ(5) destiné à alimenter en fil ladite machine (2),
c) un distributeur (7), moyen de mettre en regard ledit dispositif DAᵢ (6), correspondant audit fil sélectionné Fᵢ et ledit dispositif récepteur DR (8),
et dans lequel,
1) ledit fil (9) alimentant lesdits dispositifs d'approvisionnement DAᵢ (6) est redressé,
2) ledit moyen de guidage aval GVⱼ(5) est un tube flexible,
3) ledit moyen de guidage amont GMᵢ (4) est un tube flexible.

2. Dispositif selon la revendication 1 dans lequel lesdits dispositifs d'approvisionnement DAᵢ (6) sont fixes, et ladite mise en regard dudit dispositif DAᵢ sélectionné et dudit dispositif récepteur DR (8) est effectuée grâce à un distributeur (7) assurant le déplacement dudit dispositif récepteur DR (8) en regard dudit dispositif d'approvisionnement DAᵢ (6), correspondant au fil sélectionné Fᵢ (9).

3. Dispositif selon la revendication 2 dans lequel ladite mise en regard dudit dispositif DAᵢ (6) sélectionné et dudit dispositif récepteur DR (8) est effectuée grâce à un distributeur (7) soit linéaire, soit circulaire, à n positions correspondant aux sorties des n dispositifs DAᵢ (6), par un déplacement soit linéaire, soit angulaire sélectif dudit dispositif récepteur DR (8).

4. Dispositif selon la revendication 1 destiné à alimenter plus d'une machine Mⱼ (2), comprenant autant de dispositifs récepteurs DRⱼ (8) et de moyens de guidage aval GVⱼ (5), j allant de 2 à p, avec p typiquement inférieur à 10, que de machines Mⱼ (2) à alimenter, dans lequel ladite mise en regard dudit dispositif DAᵢ (6) et dudit dispositif récepteur DRⱼ (8) sélectionnés est effectuée grâce à un distributeur (7) matriciel à n lignes et p colonnes, chacun desdits dispositifs récepteurs DRⱼ (8) étant déplacé linéairement sur la ligne j pour se positionner sur n'importe quelle colonne i sélectionnée, et chacun desdits dispositifs d'approvisionnement DAᵢ (6) étant déplacé linéairement sur la colonne i pour se positionner sur n'importe quelle ligne j sélectionnée.

5. Dispositif selon une queclconque des revendications 1 à 4 dans lequel ledit fil redressé (9) est métallique ou comprend une âme métallique.

6. Dispositif selon la revendication 5 dans lequel ledit fil redressé est obtenu à partir d'un conditionnement de fil (9) prédressé en fût.

7. Dispositif selon la revendication 5 dans lequel, lorsque ledit conditionnement (3) de fil métallique (9) est un conditionnement sous forme de bobine ou couronne, des moyens auxilliaires pour redresser ledit fil, connus en eux-mêmes, sont introduits en amont dudit distributeur (7), de manière à ce que ledit dispositif récepteur DR (8) ne soit alimenté qu'en fil métallique redressé.

8. Dispositif selon une quelconque des revendications 1 à 7 5 dans lequel chacun ledit dispositif DAᵢ (6) comprend un moyen d'entraînement amont (60), et ledit dispositif récepteur DRⱼ (8) comprend une cisaille (80) et un moyen d'entraînement aval (81).

9. Dispositif selon une quelconque des revendications 1 à 8 comprenant des moyens d'automation et de coordination permettant le changement automatique de fil Fᵢ et/ou de machine Mⱼ, notamment par la mise en oeuvre automatique dudit distributeur (7) avec ses moyens de mise en mouvement (71,74), des moyens d'entraînement amont (60) et aval (81) et de ladite cisaille (80), ou tout autres moyens relatifs au changement de fil.

10. Application du dispositif selon une quelconque des revendications 1 à 9 à l'alimentation multiple et centralisée d'une ou plusieurs machines Mⱼ (2) par plusieurs fils Fᵢ (9), lesdits moyens de guidage (4,5) et/ou d'entraînement (60,81) étant adaptés aux caractéristiques mécaniques dudit fil, notamment à sa résistance à la compression.

11. Application selon la revendication 10 aux machines (2) d'électroérosion à fil, de décolletage, de frappe à froid et de soudure.

## Claims

1. Multiple feed device (1) for at least one machine (2) with a selected wire (9), comprising:
a) the same number of feed devices DAᵢ (6) where i varies from 1 to n and n varies from 2 to 16, as there are wires Fᵢ (9) to be selected, each device DAᵢ (6) being fed from wire (9) packaging Cᵢ (3) by means of input side guide means GMᵢ (4),
b) at least one receiver device DR (8), provided with an output side guide means GVⱼ (5) designed to feed said machine (2) with wire,
c) a distributor (7), which allows said feed device Daᵢ (6) corresponding to said selected wire Fᵢ, to face said receiver DR (8),
and in which,
1) said wire (9) feeding said feed devices DAᵢ (6) is straightened,
2) said downstream guide means GVⱼ (5) is a flexible tube,
3) said upstream guide means GMᵢ (4) is a flexible tube.

2. Device according to claim 1, in which said feed devices DAᵢ (6) are fixed and said selected device DAᵢ and said receiver device DR (8) face each other by means of a distributor (7) moving said receiver device DR (8) to face said feed device DAᵢ (6) corresponding to the selected wire Fᵢ (9).

3. Device according to claim 2 in which said selected device DAᵢ (6) and said receiver device DR (8) face each other by means of a linear or circular distributor (7) with n positions corresponding to the outputs from the n devices DAᵢ (6) by a selective linear or angular movement of said receiver device DR (8).

4. Device according to claim 1, designed to feed more than one machine Mⱼ (2) comprising as many receiver devices DRⱼ (8) and downstream guide means GVⱼ (5) where j varies from 2 to p with p typically less than 10, as there are machines Mⱼ (2) to be fed, in which said device DAᵢ (6) and said selected receiver device DRⱼ (8) face each other by a matrix distributor (7) with n rows and p columns, each of said receiver devices DRⱼ (8) being moved linearly along line j to position itself on any selected column i and each of said feed devices DAᵢ (6) are moved linearly along column i to position itself on any selected row j.

5. Device according to any one of claims 1 to 4, in which said straightened wire (9) is metallic or comprises a metal core.

6. Device according to claim 5, in which said straightened wire is obtained from pre-straightened wire (9) packaged in a drum.

7. Device according to claim 5, in which secondary means known per se are provided to straighten said wire when the metallic wire (9) packaging (3) is in the form of a reel or coil, and are inserted upstream said distributor (7) such that said receiver device DR (8) is fed only with straightened metal wire.

8. Device according to any one of claims 1 to 7 in which each of said devices DAᵢ (6) comprises an upstream drive means (60), and said receiver device DRⱼ (8) comprises shears (80) and a downstream drive means (81).

9. Device according to any one of claims 1 to 8 comprising automation and coordination means for automatic changing of the wire Fᵢ and/or machine Mⱼ, particularly by automatic use of said distributor (7) with its movement control means (71, 74), upstream (60) and downstream (81) drive means and said shears (80), or any other means of changing the wire.

10. Application of the device according to any one of claims 1 to 9 to multiple and central feed of one or several machines Mⱼ (2) by several wires Fᵢ (9), said guide means (4, 5) and/or drive means (60, 81) being adapted to the mechanical properties of said wire, and particularly its compression strength.

11. Application according to claim 10 to wire electroerosion, screw cutting, cold heading or welding machines (2).

## Patentansprüche

1. Zufuhrvorrichtung (1) für mehrere ausgewählte Drähte (9) an mindestens einer Maschine (2), umfassend
a) ebenso viele Versorgungsvorrichtungen DAᵢ (6) mit i von 1 bis n, n von 2 bis 16, wie zu wählende Drähte Fᵢ (9), wobei jede Vorrichtung DAᵢ (6) von einer Verpackung Cᵢ (3) für Draht (9) aus über ein oberes Führungsmittel GMᵢ (4) versorgt wird,
b) mindestens eine Aufnahmevorrichtung DR (8) mit einem unteren Führungsmittel GVⱼ (5) zur Versorgung der Maschine (2) mit Draht,
c) einen Verteiler (7), mit dem die Vorrichtung DAᵢ (6), die dem ausgewählten Draht Fᵢ entspricht, so angeordnet wird, dass sie der Aufnahmevorrichtung DR (8) gegenüberliegt,
und bei der
1) der Draht (9), der den Versorgungsvorrichtungen DAᵢ (6) zugeführt wird, nachgerichtet ist,
2) das untere Führungsmittel GVⱼ (5) ein Schlauch ist,
3) das obere Führungsmittel GMᵢ (4) ein Schlauch ist.

2. Vorrichtung nach Anspruch 1, bei der die Versorgungsvorrichtungen DAᵢ (6) feststehend sind und die gegenüberliegende Anordnung der ausgewählten Vorrichtung DAᵢ und der Aufnahmevorrichtung DR (8) durch einen Verteiler (7) erfolgt, welcher die Bewegung der Aufnahmevorrichtung DR (8) so regelt, dass sie der Versorgungsvorrichtung DAᵢ (6), die dem ausgewählten Draht Fᵢ (9) entspricht, gegenüberliegt.

3. Vorrichtung nach Anspruch 2, bei der die gegenüberliegende Anordnung der ausgewählten Vorrichtung DAᵢ (6) und der Aufnahmevorrichtung DR (8) über einen entweder geradlinigen oder kreisförmigen Verteiler (7) mit n Stellungen entsprechend den Ausgängen der n Vorrichtungen DAᵢ (6) durch eine entweder geradlinige oder winklige selektive Bewegung der Aufnahmevorrichtung DR (8) erfolgt.

4. Vorrichtung nach Anspruch 1 zur Versorgung mehr als einer Maschine Mⱼ (2), umfassend ebenso viele Aufnahmevorrichtungen DRⱼ (8) und untere Führungsmittel GVⱼ (5) mit j von 2 bis p, wobei p typischerweise kleiner als 10 ist, wie zu versorgende Maschinen Mⱼ (2), bei der die gegenüberliegende Anordnung der Vorrichtung DAᵢ (6) und der ausgewählten Aufnahmevorrichtung DRⱼ (8) über einen matrixförmigen Verteiler (7) mit n Zeilen und p Spalten erfolgt, wobei die Aufnahmevorrichtungen DRⱼ (8) jeweils geradlinig auf der Zeile j bewegt wird, um sich dann auf einer beliebigen ausgewählten Spalte i zu positionieren, und die Versorgungsvorrichtungen DAᵢ (6) jeweils geradlinig auf der Spalte i bewegt werden, um sich dann auf einer beliebigen ausgewählten Zeile j zu positionieren.

5. Vorrichtung nach einem der Ansprüche 1 bis 4, bei der der nachgerichtete Drahl (9) aus Metall ist oder eine Metallseele umfasst.

6. Vorrichtung nach Anspruch 5, bei der der nachgerichtete Draht aus einer Verpackung von vorgerichtetem Draht (9) in Trommeln erhalten wird.

7. Vorrichtung nach Anspruch 5, bei der für den Fall, dass es sich bei der Verpackung (3) des Metalldrahts (9) um eine Verpackung in Form von Spulen oder Ringen handelt, in sich bekannte zusätzliche Mittel zum Nachrichten des Drahts dem Verteiler (7) vorgeschaltet werden, so dass die Aufnahmevorrichtung DR (8) nur mit nachgerichtetem Draht versorgt wird.

8. Vorrichtung nach einem der Ansprüche 1 bis 7, bei der jede Vorrichtung DAᵢ (6) ein oberes Zugmittel (60) und die Aufnahmevorrichtung DRⱼ (8) eine Schere (80) und ein unteres Zugmittel (81) umfasst.

9. Vorrichtung nach einem der Ansprüche 1 bis 8 mit Automations- und Koordinationsmitteln zur automatischen Auswechselung eines Drahtes Fᵢ und/oder einer Maschine Mⱼ, insbesondere durch die Automatisierung des Verteilers (7) mit seinen Bewegungsmitteln (71, 74), der oberen und unteren Zugmittel (60 und 81) und der Schere (80), oder beliebigen anderen Mitteln für den Drahtwechsel.

10. Anwendung der Vorrichtung nach einem der Ansprüche 1 bis 9 auf die Vielfach- und Zentralversorgung einer oder mehrerer Maschinen Mⱼ (2) mit mehreren Drähten Fᵢ (9), wobei die Führungsmittel (4, 5) und/oder die Zugmittel (60, 81) an die mechanischen Eigenschaften des Drahts, insbesondere an seine Druckfestigkeit angepaßt sind.

11. Anwendung nach Anspruch 10 auf Maschinen (2) zur funkenerosiven Bearbeitung mit Draht, Abdreh-, Kaltpräge- und Schweissmaschinen.
